# EUROPÄISCHE PATENTANMELDUNG

(11) **EP 1 353 101 A2**
(43) Veröffentlichungstag der Anmeldung: **15.10.2003**
(21) Anmeldenummer: 03004600.7
(22) Anmeldetag: 01.03.2003
(51) Int. Cl.: F16K 31/06

(54) **Verfahren zur elektrischen Ansteuerung eines direktwirkenden Elektromagnetventils sowie Vorrichtung zur Durchführung des Verfahrens**

(30) Priorität: 13.04.2002 DE 10216484
(71) Anmelder: A. und K. Müller GmbH & Co. KG, 40595 Düsseldorf (DE)
(72) Erfinder: Glaus, Uwe, 40593 Düsseldorf (DE)
(74) Vertreter: Feder, Wolf-Dietrich, Dr. Dipl.-Phys.

(57) **Zusammenfassung**

Ein Verfahren zur elektrischen Ansteuerung eines direktwirkenden Elektromagnetventils sowie eine Vorrichtung zur Durchführung des Verfahrens. Das Elektromagnetventil besitzt einen in einer Magnetspule (1) bewegbar angeordneten Magnetanker (3), dessen eines Ende mit einem Ventilteller gekoppelt ist und dessen anderes Ende einem in der Magnetspule (1) angeordneten, mit einem Magnetjoch (1.3) verbundenen Kopfstück (4) gegenüberliegt. Der Magnetanker bewegt sich bei Erregung der Magnetspule (1) gegen die Kraftwirkung eines Federelements (5) auf das Kopfstück (4) zu und legt sich schließlich an das Kopfstück (4) an. Zur Dämpfung des beim Anschlag des Magnetankers (3) an das Kopfstück (4) auftretenden Geräusches wird im Verlauf der elektrischen Ansteuerung die der Magnetspule zugeführte elektrische Energie gemäß einer vorgegebenen Zeitfunktion beim Erregen und/oder beim Entregen der Magnetspule (1) derart reduziert, daß der Magnetanker (3) mindestens auf einem vorgegebenen Endabschnitt seiner Bewegungsbahn in Richtung auf das Kopfstück (4) und/oder vom Kopfstück (4) weg sich mit abnehmender Geschwindigkeit bewegt.

## Beschreibung

Die Erfindung betrifft ein Verfahren zur elektrischen Ansteuerung eines direktwirkenden Elektromagnetventils, das die Merkmale aus dem Oberbegriff des Patentanspruchs 1 aufweist, sowie eine Vorrichtung zur Durchführung des Verfahrens.

Bei Elektromagnetventilen der angegebenen Bauart tritt durch das Anschlagen des Magnetankers am jeweiligen Ende seiner Bewegungsbahn, insbesondere durch das Anschlagen des Magnetankers beim Erregen der Magnetspule an das Kopfstück, ein Anschlaggeräusch auf, das vor allem, wenn es sich auf Resonanzflächen überträgt, beispielsweise über die Blechverkleidung eines Getränkeautomaten, als störend empfunden wird. Derartige Geräusche werden als mindere Qualität eines Gerätes und als akustische Störung, beispielsweise in einem Büro, gewertet.

Es ist bekannt zur Dämpfung der Anschlaggeräusche elastomere Bauteile zwischen den aufeinanderprallenden Metallteilen anzuordnen, also beispielsweise zwischen den Polflächen des Magnetankers und des Kopfstücks. Durch derartige Dämpfungsorgane kann die Anschlagenergie weitestgehend aufgenommen werden. Ein Nachteil dieses Dämpfungsverfahrens besteht darin, daß der durch die Einschaltung eines Dämpfungsorgans zwischen die Polflächen entstehende Luftspalt sich negativ auf den Wirkungsgrad des Gesamtsystems auswirkt. Es muß unnötig viel elektrische Energie eingebracht werden, die nach erfolgtem Anzug des Magnetankers in Wärme umgewandelt wird.

Der Erfindung liegt die Aufgabe zugrunde, ein Verfahren zur elektrischen Ansteuerung eines direktwirkenden Elektromagnetventils mit den Merkmalen aus dem Oberbegriff des Patentanspruchs 1 zu schaffen, mit dem es möglich ist, ohne oder zusätzlich zu einer passiven Geräuschdämpfung durch Dämpfungsorgane eine Verminderung der Geräuschentwicklung des Elektromagnetventils beim Anschlagen des Magnetankers zu erreichen.

Die Lösung dieser Aufgabe erfolgt erfindungsgemäß mit den Merkmalen aus dem kennzeichnenden Teil des Patentanspruchs 1. Vorteilhafte Weiterbildungen des erfindungsgemäßen Verfahrens sind in den abhängigen Ansprüchen 2 bis 11 beschrieben. Eine Vorrichtung zur Durchführung des Verfahrens ist Gegenstand von Anspruch 12 und vorteilhafte Weiterbildungen dieser Vorrichtung sind in den Ansprüchen 13 und 14 beschrieben.

Der Grundgedanke des erfindungsgemäßen Verfahrens besteht darin, die Ursache des beim Anschlagen des Magnetankers auftreffenden Geräusches direkt zu beeinflussen, indem in einem gleichsam "aktiven" Dämpfungsverfahren die Bewegung des Magnetankers elektromagnetisch beeinflußt wird. Das heißt, der Magnetanker soll kurz vor dem Aufeinanderschlagen der einander gegenüberliegenden Polflächen so negativ beschleunigt werden, daß die Aufschlaggeschwindigkeit stark herabgesetzt wird und im Idealfall den Wert NULL erreicht, ohne daß die Ventilfunktion hierdurch negativ beeinflußt wird. Die Reduzierung der zugeführten elektrischen Energie soll dabei derart verlaufen, daß eine bremsende Kraft auf den Magnetanker einwirkt, die beim Erregen der zunehmend stärker werdenden Kraft des Magnetfeldes entgegenwirkt und gegebenenfalls beim Entregen der linearen Kraft der Feder entgegenwirkt.

Die Reduzierung der zugeführten elektrischen Energie kann dabei in Abhängigkeit von der Bauart des Ventils und vom Verwendungszweck in unterschiedlicher Weise geschehen. So kann beispielsweise auf einem vorgegebenen letzten Zeitabschnitt der Bewegung des Magnetankers die Eingangsgleichspannung der Magnetspule um einen definierten Betrag abgesenkt werden. Weiterhin kann die Reduzierung der zugeführten elektrischen Energie durch eine entsprechende Amplituden- und/oder Richtungsmodulation der Eingangsgleichspannung der Magnetspule oder durch Zuführung einer gepulsten Gleichspannung und entsprechende Pulsweitenmodulation erreicht werden.

Die Steuerung des Verfahrens kann vorteilhafterweise in Abhängigkeit von der jeweiligen Stellung des Magnetankers erfolgen. Hierzu kann es sinnvoll sein die Zeit zu messen, die der Magnetanker für seinen Weg benötigt. Dies kann entweder dynamisch erfolgen oder in Form eines ventilbezogenen Meßzyklusses.

Bei Gleichstromventilen ist eine Auswertung der Gegen-EMK durch Bewertung des Spannungsabfalles an einem Shunt möglich. Bei erfolgtem Anschlag des Magnetankers an der Polfläche des Kopfstückes kommt es zu einem Abfall der Spannung. Dieses Signal könnte mittels eines bei der Montage des Gerätes durchzuführenden Justage-Schaltvorgangs einmalig bestimmt werden. Nach dieser Messung, die u.a. die Fertigungsstreuung der Ventilkomponenten ausgleichen soll, übernimmt dann ein vorher in der Steuerelektronik abgelegter Algorithmus die Steuerung der weiteren Schaltungen. Weitere mögliche Meßverfahren sind eine induktive Abfrage in Form einer Spulenhilfswicklung in welcher die Spuleneigeninduktion ausgewertet wird oder aber auch ein induktiv oder mechanisch betätigbarer externer Schalter.

Mittels der beschriebenen Meßverfahren können auch alterungsbedingte Veränderungen, beispielsweise aufgrund einer Kompression der Dichtungen ausgeglichen werden bzw. eine neue Justierung vorgenommen werden.

Eine Vorrichtung zur Durchführung des erfindungsgemäßen Verfahrens enthält eine dem Eingang der Magnetspule vorgeschaltete Steuervorrichtung zur Reduzierung der der Magnetspule zugeführten elektrischen Energie, welcher während der Erregung und/oder der Entregung der Magnetspule ein mindestens die jeweilige Endstellung des Magnetankers charakterisierendes elektrisches Signal zugeführt wird. Diese Steuervorrichtung kann in einem auf die Anschlußstifte der Magnetspule aufsteckbaren Zusatzgerät angeordnet sein.

Im folgenden wird anhand der beigefügten Zeichnungen das erfindungsgemäße Verfahren in seiner Anwendung auf ein Elektromagnetventil näher erläutert.

In den Zeichnungen zeigen:
Fig. 1 das Magnetsystem eines Elektromagnetventils in Seitenansicht;
Fig. 2 das Magnetsystem nach Fig. 1 in einer Aufsicht;
Fig. 3 in einer explodierten perspektivischen Darstellung das Magnetsystem nach den Fig. 1 und 2;
Fig. 4 in einer perspektivischen Darstellung eine Variante des Magnetsystems nach Fig. 1 bis 3;
Fig. 5 in gegenüber den Fig. 1 bis 4 leicht vergrößerter Darstellung einen Axialschnitt durch das Magnetsystem eines Elektromagnetventils im entregten Zustand der Magnetspule;
Fig. 6 in einer Darstellung analog Fig. 5 das Magnetsystem im erregten Zustand der Magnetspule;
Fig. 7 das Weg/Zeit-Diagramm des Magnetankers des Magnetsystems nach Fig. 5 und 6 beim Erregen der Magnetspule;
Fig. 8 und 8A ein Spannungs/Zeit-Diagramm für den Spannungsverlauf beim Erregen der Magnetspule;
Fig. 9 ein Spannungs/Zeit-Diagramm für den Spannungsverlauf an der Magnetspule bei Pulsweiten-Modulation;
Fig. 10 ein Strom/Zeit-Diagramm zur Erläuterung des beim Anschlag des Magnetankers auftretenden Signals;
Fig. 11 ein Prinzipschaltbild für eine Steuereinrichtung zur Ansteuerung eines Elektromagnetventils nach Fig. 1 bis 6.

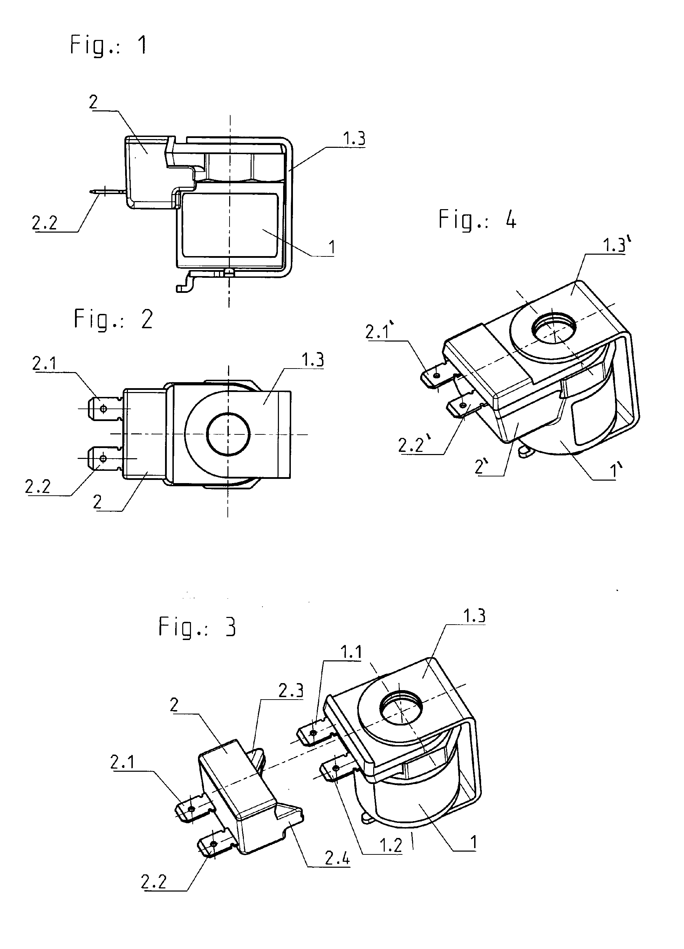

Im folgenden wird anhand der Fig. 1 bis 6 zunächst der Aufbau des Magnetsystems eines Elektromagnetventils erläutert.

Das Magnetsystem enthält eine Magnetspule 1 mit äußeren Anschlußklemmen 1.1 und 1.2. Die Magnetspule 1 wird umfaßt von einem Magnetjoch 1.3.

Bei der Ausführungsform nach den Fig. 1 bis 3 ist auf das Magnetsystem im Bereich der Anschlußklemmen 1.1 und 1.2 der Magnetspule 1 ein Aufsatzstück 2 aufsteckbar mit Eingangsklemmen 2.1 und 2.2 und Ausgangsklemmen 2.3 und 2.4. Das Aufsatzstück 2 enthält eine der Magnetspule 1 vorgeschaltete Steuervorrichtung zur Durchführung des weiter unten beschriebenen Verfahrens zur elektrischen Ansteuerung des Magnetsystems.

Bei der Ausführungsform nach Fig. 4 ist der Magnetspule 1' mit Magnetjoch 1.3' ein mit dieser fest verbundenes Aufsatzstück 2' zugeordnet, dessen Eingangsklemmen 2.1' bzw. 2.2' dann die Eingangsklemmen des gesamten Magnetsystems darstellen.

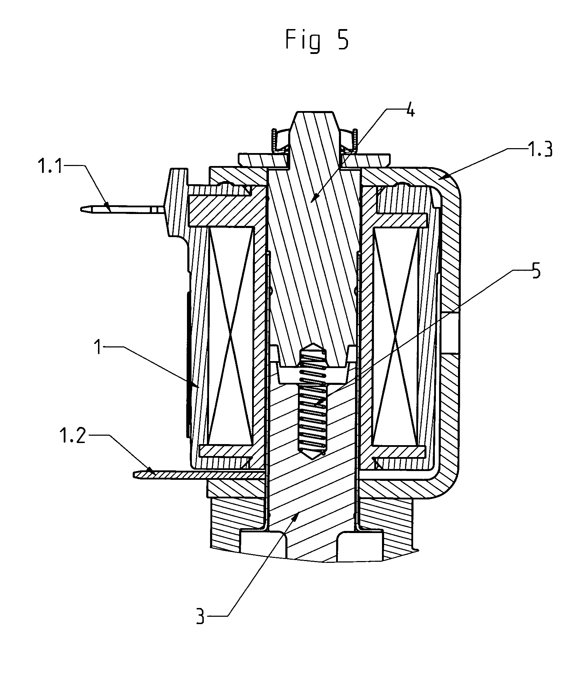

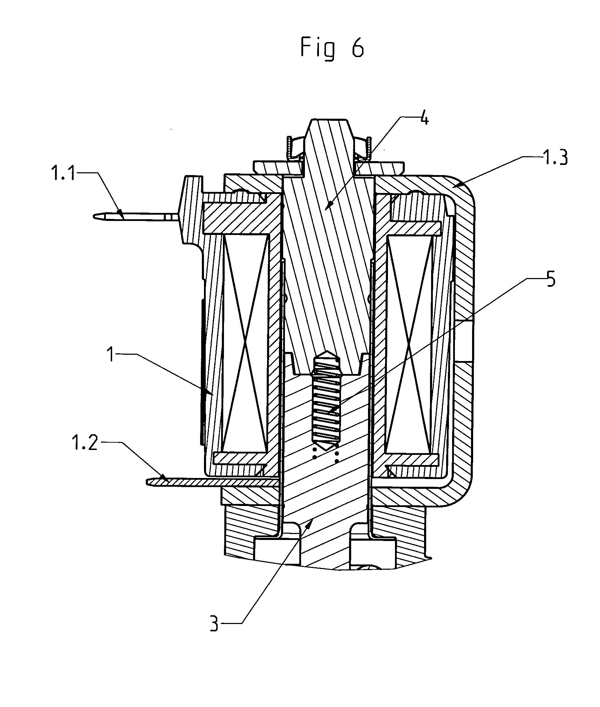

Der innere Aufbau des Magnetsystems ist den Fig. 5 und 6 zu entnehmen. In der Magnetspule 1 ist ein Magnetanker 3 verschiebbar angeordnet, dessen in Fig. 5 und 6 unteres Ende in nicht eigens dargestellter Weise mit dem Ventilteller eines Elektromagnetventils gekoppelt ist. Das in Fig. 5 und 6 obere Ende des Magnetankers 3 liegt einem in der Magnetspule 1 angeordneten und mit dem Magnetjoch 1.3 verbundenen Kopfstück 4 gegenüber, wobei zwischen dem Kopfstück 4 und dem Magnetanker 3 eine Schraubendruckfeder 5 angeordnet ist, unter deren Kraftwirkung der Magnetanker 3 im entregten Zustand der Magnetspule 1 in die in Fig. 5 dargestellte, vom Kopfstück 4 entfernte Position gedrückt wird, die der Schließstellung des Elektromagnetventils entspricht. Bei Erregung der Magnetspule 1 wird der Magnetanker 3 gegen die Kraftwirkung der Feder 5 angezogen und in Richtung auf das Kopfstück 4 bewegt, bis er an diesem anschlägt.

Dieses Anschlagen des Magnetankers 3 an der Polfläche des Kopfstücks 4 verursacht ein Anschlaggeräusch, das als störend empfunden wird und daher gedämpft werden soll. Diese Dämpfung könnte grundsätzlich durch ein Dämpfungselement aus elastomerem Material geschehen, das in nicht dargestellter Weise zwischen Kopfstück 4 und Magnetanker 3 angeordnet sein kann. Da in einem solchen Falle aber zwischen dem Magnetanker 3 und dem Kopftstück 4 immer ein Luftspalt verbleiben würde, der den Wirkungsgrad des Systems verringert, soll durch ein besonderes Ansteuerverfahren der Magnetspule 1 eine Dämpfung des Anschlaggeräusches ohne Zwischenschaltung von dämpfendem Material erreicht werden.

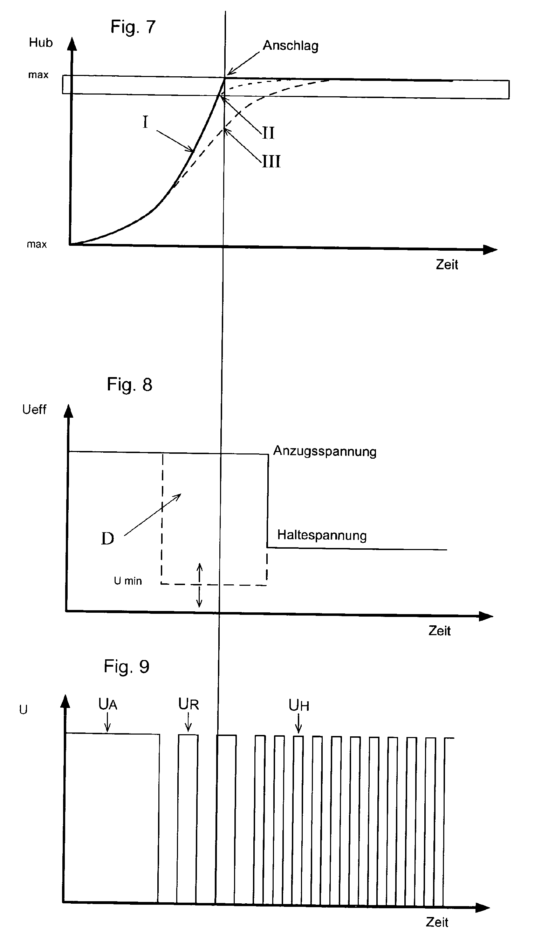

Hierzu dient ein Verfahren, das im folgenden anhand der Fig. 7 bis 10 erläutert wird. Fig. 7 zeigt in einem Weg/Zeit-Diagramm den Bewegungsverlauf des Magnetankers 3 beim Erregen der Magnetspule 1. Wenn eine konstante Spannung angelegt wird, erfolgt die Bewegung des Magnetankers 3 nach der in Fig. 7 durchgezogenen Kurve I. Wie aus der Kurve I abzulesen, steigt die Geschwindigkeit des Magnetankers 3 zunächst an, verläuft dann über einen Teil der Bewegungsbahn konstant und geht am Ende der Bewegungsbahn beim Anschlag an das Kopfstück 4 schlagartig auf den Wert NULL zurück, wodurch das starke Anschlaggeräusch erzeugt wird.

Wird, wie oben erwähnt, ein Dämpfungsmaterial zwischen Magnetanker 3 und Kopfstück 4 angeordnet, so geht der Verlauf der Kurve I am Ende der Bewegungsbahn in den gestrichelt eingezeichneten Verlauf II über, was bedeutet, daß eine gewisse mechanische Dämpfung der Bewegung eintritt.

Wird die angelegte Spannung dagegen beim Erregen der Magnetspule 1 in einer Weise beeinflußt, daß eine Reduzierung der zugeführten elektrischen Energie stattfindet, d.h. wird beispielsweise die angelegte Spannung gemäß einer genau vorgegebenen Zeitfunktion abgesenkt, so kann erreicht werden, daß die Bewegungsbahn des Magnetankers 3 zunächst in einem ersten Abschnitt der Kurve I folgt und dann in die in Fig. 7 gestrichelt eingezeichnete Kurve III übergeht. Man entnimmt dem Verlauf dieser Kurve, daß die Geschwindigkeit in einem stetigen Verlauf sich dem Wert NULL annähert. Die Führung der Spannung muß dabei so sein, daß der Wert NULL frühestens beim Anschlag an das Kopfstück 4 erreicht wird.

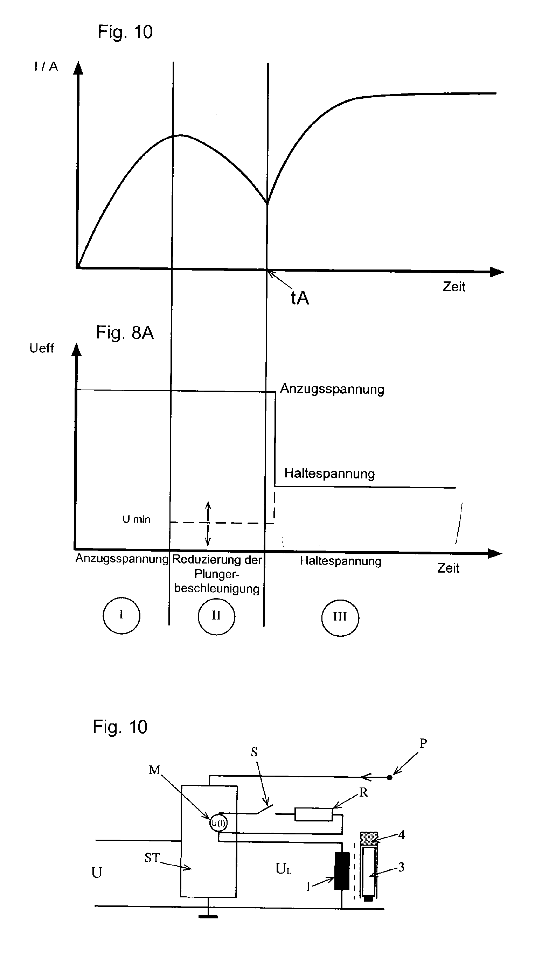

Die Fig. 8 und 8A zeigen in stark verallgemeinerter Form den Verlauf der Effektivspannung Ueff in Abhängigkeit von der Zeit bei der Erregung der Magnetspule 1. Innerhalb des in Fig. 8 mit D bezeichneten Bereichs erfolgt eine Beeinflussung der Spannung Ueff in der Weise, daß die gewünschte Reduzierung der elektrischen Energie eintritt. Dies kann beispielsweise in der Form geschehen, wie dies in Fig. 9 dargestellt ist. Danach wird die ursprüngliche Anzugsspannung UA beim Erreichen des Bereiches D in Fig. 8 in Einzelimpulsen zugeführt und dabei einer Impulsweiten-Modulation unterworfen, wobei der Verlauf des Tastverhältnisses dieser Modulation die Absenkung der Effektivspannung und damit die Reduzierung der zugeführten Energie bestimmt. Der Magnetanker 3 wird auf dem letzten Abschnitt seiner Bahn negativ beschleunigt und erreicht im optimalen Fall die Anschlagstelle am Kopfstück 4 mit der Geschwindigkeit NULL. Nach dem Anschlagen erhält in an sich bekannter Weise die Spannung einen niedrigeren Wert der einer Haltespannung entspricht. Das heißt, daß im Ausführungsbeispiel nach Fig. 9 das Tastverhältnis der Impulsweiten-Modulation so eingestellt wird, daß sich die Haltespannung UH ergibt.

Zur Erläuterung des Steuervorgangs ist in Fig. 10 der Verlauf des Stroms an der Magnetspule in Abhängigkeit von der Zeit dargestellt, und zur besseren Zuordnung dieses Stromverlaufs zu den jeweiligen Phasen der Ansteuerung ist unter die Fig. 10 als Fig. 8A noch einmal eine Darstellung analog Fig. 8 gesetzt. Wie ersichtlich können 3 Phasen des Steuervorgangs unterschieden werden, die sich jeweils durch die Art der Änderung des Stromverlaufs unterscheiden. In Phase I', in der die volle Anzugsspannung anliegt, gilt dI/dt ≥0, in der Phase II', in der die Reduzierung der Plungerbeschleunigung erfolgt, gilt dI/dt ≤0 und in der Phase III', in der lediglich die etwas niedrigere Haltespannung anliegt gilt dI/dt ≥0.

Fig. 11 zeigt in einem stark schematisierten Prinzipschaltbild eine Steuervorrichtung zur Steuerung der an die Magnetspule 1 zur Bewegung des Magnetankers 3 angelegten Spannung UL. Die Steuervorrichtung ST kann einen Mikrorechner oder Mikroprozessor enthalten, mit dem aufgrund eines eingespeicherten Algorithmus der Verlauf der Spannung UL an der Magnetspule auf der Grundlage der angelegten Spannung U gesteuert wird. Die Steuervorrichtung ST enthält weiterhin eine Meßvorrichtung M, mit deren Hilfe der sich aufgrund des Stromverlaufs gemäß Fig. 10 ergebende Spannungsverlauf an einem Shunt R gemessen werden kann, wenn dieser Shunt durch Betätigung eines von der Steuervorrichtung ST her ansteuerbaren Schalters S während des Ansteuervorgangs kurzzeitig zugeschaltet wird. Die Steuervorrichtung ST ist somit in der Lage, die Gegen-EMK der Magnetspule 1 zu messen und somit den Zeitpunkt tA (Fig. 10) zu bestimmen, indem der Magnetanker 3 am Kopfstück 4 anschlägt. Die aufgenommenen Meßwerte werden in der Steuervorrichtung ST gespeichert.

Die Justierung der Steuervorrichtung kann dann in folgender Weise erfolgen.

Nach erfolgtem Einbau des Ventils und der Steuervorrichtung wird das Ventil betätigt und subjektiv nach dem Geräuschverhalten bewertet. Die Steuervorrichtung ST ist an ein Eingabeelement P angeschlossen, das als Potentiometer oder Stufenschalter ausgebildet sein kann, mit dessen Hilfe das Servicepersonal die Reduzierung der Beschleunigung beeinflussen und somit das Ventilgeräusch erhöhen oder reduzieren kann. Mit Hilfe des Eingabeelements P kann auf in der Steuervorrichtung ST hinterlegte Werte zurückgegriffen werden. Nach der Justierung greift die Steuervorrichtung auf die über P vorgegebenen Parameterwerte zurück und steuert gemäß dem vorgegebenen Algorithmus den Verlauf der Spannung UL. Der Vorteil dieser Lösung liegt darin, daß sehr genau auf das Geräuschverhalten der Gesamteinrichtung, in der sich das Elektromagnetventil befindet, eingegangen werden kann, also auch der in der Einrichtung auftretende Körperschall berücksichtigt werden kann und daß bei einem späteren Service eine erneute Justierung, um eventuell Verschleiß und Alterung der Komponenten des Elektromagnetventils zu kompensieren, möglich ist. Ein weiterer Vorteil dieses Verfahrens liegt darin, daß die Steuervorrichtung nicht von vornherein auf eine bestimmte Ventilfamilie festgelegt werden muß.

Es ist allerdings auch möglich, in die Steuervorrichtung einige Parameter einer bestimmten Ventilfamilie einzugeben, für die die Steuervorrichtung dann ausgelegt ist und die dann im Betrieb berücksichtigt werden müssen. Es werden bestimmte Parameter vorher empirisch ermittelt und eingespeichert. Diese Parameter sind in erster Linie die Anzugszeiten, die direkt mit den Betriebsparametern, wie Vordruck und Temperatur, im Zusammenhang stehen. Aus den ermittelten Daten wird ein Kennfeld aufgebaut und in der Steuervorrichtung hinterlegt. Bei der Verbindung der Steuervorrichtung mit einem Ventil der entsprechenden Ventilfamilie wird nun anhand der Stromanstiegskurve das entsprechende Segment des Kennfeldes zur Reduzierung der Beschleunigung des Magnetankers ausgewählt und verwendet.

## Patentansprüche

1. Verfahren zur elektrischen Ansteuerung eines direktwirkenden Elektromagnetventils mit einem in einer Magnetspule (1) bewegbar angeordneten Magnetanker (3), dessen eines Ende mit einem Ventilteller gekoppelt ist und dessen anderes Ende einem in der Magnetspule (1) angeordneten, mit einem Magnetjoch (1.3) verbundenen Kopfstück (4) gegenüberliegt und der sich bei Erregung der Magnetspule (1) gegen die Kraftwirkung eines Federelements (5) auf das Kopfstück (4) zu bewegt und sich schließlich an das Kopfstück anlegt, **dadurch gekennzeichnet, daß** im Verlauf der elektrischen Ansteuerung die der Magnetspule zugeführte elektrische Energie gemäß einer vorgegebenen Zeitfunktion beim Erregen und/oder beim Entregen der Magnetspule derart reduziert wird, daß der Magnetanker mindestens auf einem vorgegebenen Endabschnitt seiner Bewegungsbahn in Richtung auf das Kopfstück und/oder vom Kopfstück weg sich mit abnehmender Geschwindigkeit bewegt.

2. Verfahren nach Anspruch 1, **dadurch gekennzeichnet, daß** bei Erregung der Magnetspule die Energiezuführung derart reduziert wird, daß die Geschwindigkeit des Magnetankers beim Auftreffen auf das Kopfstück praktisch den Wert NULL erreicht hat.

3. Verfahren nach Anspruch 1 oder 2, **dadurch gekennzeichnet, daß** die Reduzierung der zugeführten elektrischen Energie durch entsprechende Absenkung der Eingangsgleichspannung der Magnetspule durchgeführt wird.

4. Verfahren nach Anspruch 1 oder 2, **dadurch gekennzeichnet, daß** die Reduzierung der zugeführten elektrischen Energie durch eine entsprechende Amplituden- und/oder Richtungsmodulation der Eingangsgleichspannung der Magnetspule durchgeführt wird.

5. Verfahren nach Anspruch 1 oder 2, **dadurch gekennzeichnet, daß** die Reduzierung der zugeführten elektrischen Energie durch Zuführung einer gepulsten Gleichspannung und entsprechende Pulsweitenmodulation durchgeführt wird.

6. Verfahren nach einem der Ansprüche 1 bis 5, **dadurch gekennzeichnet, daß** die Ansteuerung in Abhängigkeit von der jeweiligen Stellung des Magnetankers erfolgt.

7. Verfahren nach Anspruch 6, **dadurch gekennzeichnet, daß** bei einem mit Gleichstrom betriebenen Elektromagnetventil die Stellung des Magnetankers aus der Bewertung der auftretenden Änderung der Gegen-EMK ermittelt wird, indem an einem Shunt der beim Anlegen des Magnetankers an das Kopfstück auftretende Spannungsabfall gemessen und ausgewertet wird.

8. Verfahren nach Anspruch 6, **dadurch gekennzeichnet, daß** an einer Hilfswicklung der Magnetspule ein die Spuleneigeninduktion charakterisierendes Signal abgenommen und ausgewertet wird.

9. Verfahren nach Anspruch 6, **dadurch gekennzeichnet, daß** die Stellung des Magnetankers durch Betätigung eines externen induktiven oder mechanischen Schalters ermittelt wird, der ein auszuwertendes Signal auslöst.

10. Verfahren nach einem der Ansprüche 6 bis 9, **dadurch gekennzeichnet, daß** die Ansteuerung des Elektromagnetventils mittels eines in einer dem Eingang der Magnetspule vorgeschalteten Steuervorrichtung abgelegten Algorithmus durchgeführt wird.

11. Verfahren nach den Ansprüchen 7 und 10, **dadurch gekennzeichnet**, das bei Betätigung des Elektromagnetventils die Gegen-EMK automatisch gemessen wird und die Meßwerte in der Steuervorrichtung gespeichert werden und die Ansteuerung des Elektromagnetventils dann aufgrund vorgebbarer Parameterwerte von Meßwerten mittels des abgelegten Algorithmus durchgeführt wird.

12. Vorrichtung zur Durchführung des Verfahrens nach einem der Ansprüche 1 bis 11 an einem direktwirkenden Elektromagnetventil mit einem in einer Magnetspule (1) bewegbar angeordneten Magnetanker (3), dessen eines Ende mit einem Ventilteller gekoppelt ist und dessen anderes Ende einem in der Magnetspule (1) angeordneten, mit einem Magnetjoch (1.3) verbundenen Kopfstück (4) gegenüberliegt und der sich bei Erregung der Magnetspule (1) gegen die Kraftwirkung eines Federelements (5) auf das Kopfstück (4) zubewegt und sich schließlich an das Kopfstück (4) anlegt, **gekennzeichnet durch** eine dem Eingang der Magnetspule (1) vorgeschaltete Steuervorrichtung (2) zur Reduzierung der der Magnetspule (1) zugeführten elektrischen Energie gemäß einer vorgegebenen Zeitfunktion, wobei der Steuervorrichtung (2) während der Erregung und/oder Entregung der Magnetspule (1) ein mindestens die jeweilige Endstellung des Magnetankers (3) charakterisierendes elektrisches Signal zugeführt wird.

13. Vorrichtung nach Anspruch 11, **dadurch gekennzeichnet, daß** die Steuervorrichtung (2) in einem auf die Anschlußklemmen (1.1, 1.2) der Magnetspule (1) aufsteckbaren Zusatzgerät (2) angeordnet ist.

14. Vorrichtung nach Anspruch 12 oder 13 zur Durchführung des Verfahrens nach Anspruch 11, **dadurch gekennzeichnet, daß** die Steuervorrichtung (ST) einen Mikrorechner oder Mikroprozessor enthält, sowie eine Meßvorrichtung (M) zur Erfassung der Gegen-EMK, Speicher zur Speicherung der Meßwerte und ein Eingabeelement (P) zur Vorgabe von Parameterwerten.
